# EUROPÄISCHE PATENTSCHRIFT

(11) **EP 1 118 573 B1**
(45) Veröffentlichungstag und Bekanntmachung des Hinweises auf die Patenterteilung: **14.06.2006**
(21) Anmeldenummer: 01100619.4
(22) Anmeldetag: 11.01.2001
(51) Int. Cl.: B66B 1/14, G05D 1/02

(54) **Verfahren zur Gewährleistung der Kollisionssicherheit eines Transportsystems mit Fahrzeugen auf gemeinsamen Fahrbahnen**
Method for providing collision safety in a transport system with vehicles travelling on the same lane
Procédé pour assurer la sécurité anti-collision d'un système de transport avec des véhicules circulant sur la même voie

(30) Priorität: 20.01.2000 EP 00810047
(43) Veröffentlichungstag der Anmeldung: 25.07.2001
(73) Patentinhaber: INVENTIO AG, 6052 Hergiswil (CH)
(72) Erfinder: Schuster, Kilian, 6275 Ballwil (CH); Gerstenkorn, Bernhard, 6033 Buchrain (CH)

(56) Entgegenhaltungen:
- EP-A- 0 263 262
- US-A- 3 790 780
- US-A- 5 295 551
- US-A- 5 819 008

## Beschreibung

Die Erfindung betrifft ein Verfahren zur Gewährleistung der Kollisionssicherheit eines Transportsystems mit als Fahrzeuge dienenden Aufzugskabinen auf gemeinsamen Fahrbahnen, wobei aus den Fahrdaten der Fahrzeuge das Bremsverhalten der Fahrzeuge bestimmt wird und wobei ein Fahrzeug zu seiner autonomen Fortbewegung bei der Ermittlung der Distanz zu einem in Bewegungsrichtung vorausliegenden Hindernis auch das Bremsverhalten des Hindernisses ermittelt und aus diesen Fahrdaten das eigene Bremsverhalten bestimmt.

Aus der Schrift EP 0 769 469 A1 ist eine Sicherheitseinrichtung für eine Multimobil-Aufzugsgruppe bekannt geworden, mittels welcher Sicherheitseinrichtung Kollisionen zwischen im gleichen Aufzugsschacht verkehrenden Aufzugskabinen verhindert werden können. Ein Sicherheitsmodul kennt zu jeder Zeit die Positionen und die die Geschwindigkeiten aller Aufzugskabinen. Zur Bestimmung der Fahrdaten sind an jeder Aufzugskabine oben und unten Sensoren angeordnet, die die Distanz zu oberhalb und unterhalb im Aufzugsschacht befindlichen Aufzugskabinen messen. Zur Bestimmung der Position der Aufzugskabinen dienen im Schacht angeordnete Messleisten, die von an den Aufzugskabinen angeordneten Lichtschranken abgetastet werden. Auf diese Weise kann die Geschwindigkeit und die Position jeder Aufzugskabine ermittelt werden. Aus diesen Fahrdaten wird anschliessend das Bremsverhalten der Aufzugskabinen bestimmt.

Ein Nachteil der bekannten Einrichtung liegt darin, dass zur Bestimmung der Position und der Geschwindigkeit aufwendige Einrichtungen im Aufzugsschacht und an den Aufzugskabinen notwendig sind, welche Einrichtungen störanfällig und ungenau sind. Weiter nachteilig ist, dass jede Aufzugskabine die Position und die Geschwindigkeit der übrigen Aufzugskabinen kennen muss, was die Dynamik der Multimobil-Aufzugsgruppe beeinträchtigt.

Aus der US Schrift 5 295 551 ist eine Einrichtung bekannt geworden, mittels der Strassenfahrzeuge zur Steigerung der Strassenkapazität nichtmechanisch koppelbar sind. Der Fahrer eines nacheilenden Fahrzeuges kann per Knopfdruck Fahrdaten eines vorauseilenden Führungsfahrzeuges abfragen. Bei Kompatibiltät wird der Fahrer des Führungsfahrzeuges um Schleppbetrieb gebeten.

Aus der US Schrift 3 790 780 und aus der EP Schrift 0 263 262 sind mit der US 5 295 551 vergleichbare Einrichtungen bekannt geworden, die sich mit der Abstandsproblematik von im Verband fahrenden Fahrzeugen befassen.

Hier will die Erfindung Abhilfe schaffen. Die Erfindung, wie sie in Anspruch 1 gekennzeichnet ist, löst die Aufgabe, die Nachteile der bekannten Einrichtung zu vermeiden und ein Verfahren für den sicheren Betrieb von autonomen, gemeinsame Fahrbahnen nutzenden Fahrzeugen anzugeben.

Die durch die Erfindung erreichten Vorteile sind im wesentlichen darin zu sehen, dass jedes Fahrzeug vollständig autonom sich bewegen kann. Das sich aus mehreren Fahrzeugen mit gemeinsamen Fahrbahnen zusammensetzende Transportsystem benötigt zur Gewährleistung der Kollisionsicherheit unter den Fahrzeugen keine zentrale Einheiten und ist daher nicht anfällig in Sachen totaler Systemausfall. Ausserdem wird die Sicherheit durch eine einfache Übertragung von lediglich einem Parameter des einen Fahrzeuges auf das andere Fahrzeug erhöht. Mit dem erfindungsgemässen Verfahren wird die Verkehrsleistung des Transportsystem verbessert. Ausserdem können ohne weiteres besondere Fahrbahnelemente wie beispielsweise Haltestellen, Weichen, Kopfstationen, usw. in das Konzept der Kollisionssicherheit integriert werden.

Im folgenden wird die Erfindung anhand von ein Ausführungsbeispiel darstellenden Zeichnungen näher erläutert.

Es zeigen:
- Fig. 1: eine schematische Darstellung eines Fahrzeuges mit einer Einrichtung zur Verhinderung von Kollisionen mit einem in Bewegungsrichtung vorausliegenden Hindernis,

- Fig. 2: einen funktionellen Ablauf einer Stoppeinheit,
- Fig. 3: einen funktionellen Ablauf einer Abfrageeinheit und
- Fig. 4: eine schematische Darstellung der Abfrageeinheit.

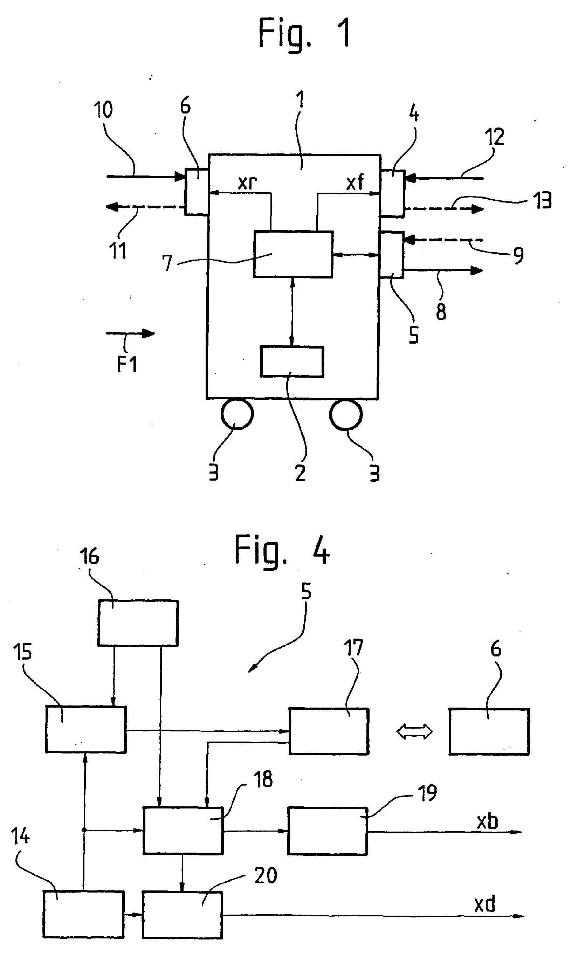

In der Fig. 1 ist mit 1 ein Fahrzeug eines Transportsystems bezeichnet. Das Transportsystem ist ein Aufzugssystem mit mindestens einem Aufzugsschacht, in dem mehrere als Fahrzeuge dienende Aufzugskabinen mit hoher Autonomie verkehren, wobei die Fortbewegungsrichtung vertikal und/oder horizontal sein kann. Im einfachsten Fall besteht das Transportsystem aus einem Aufzug mit einem Aufzugsschacht, in dem mehrere Aufzugskabinen verkehren.

Das Fahrzeug 1 weist für die Fortbewegung eine Antriebseinheit 2 und Antriebsmittel 3, beispielsweise Räder auf. In Bewegungsrichtung F1 gesehen ist vorne am Fahrzeug 1 ein Frontreflektor 4 und eine Abfrageeinheit 5 sowie rückseitig ein Rückreflektor 6 angeordnet. Antriebseinheit 2 und Abfrageeinheit 5 stehen in Verbindung mit einer Stoppeinheit 7, die einen ersten Parameter -xf und einen zweiten Parameter xr bestimmt, wobei der erste Parameter -xf dem Frontreflektor 4 und der zweite Parameter xr dem Rückreflektor 6 zur Modulation zugeführt wird.

Die Abfrageeinheit 5 sendet ein Abfragesignal 8 aus, das vom Rückreflektor eines in Bewegungsrichtung F1 vorausliegenden Hindernisses, beispielsweise ein Fahrzeug wie in Fig. 1 gezeigt mit gemeinsamer Fahrbahn, reflektiert wird. Das reflektierte Abfragesignal 9 ist mit unterbrochener Linie gezeigt. Das auf den Rückreflektor 6 auftreffende Abfragesignal eines in Bewegungsrichtung F1 rückwärtigen Hindernisses, beispielsweise ein Fahrzeug wie in Fig. 1 gezeigt mit gemeinsamer Bewegungsrichtung und gemeinsamer Fahrbahn, ist mit 10 bezeichnet und das reflektierte Abfragesignal, dargestellt mit unterbrochener Linie, ist mit 11 bezeichnet. Das auf den Frontreflektor 4 auftreffende Abfragesignal eines in Bewegungsrichtung F1 vorausliegenden Hindernisses, beispielsweise ein Fahrzeug wie in Fig. 1 gezeigt mit entgegengesetzter Bewegungsrichtung und gemeinsamer Fahrbahn, ist mit 12 bezeichnet und das reflektierte Abfragesignal, dargestellt mit unterbrochener Linie, ist mit 13 bezeichnet.

Fig. 1 zeigt ein Fahrzeug 1 für eine horizontale Bewegungsrichtung F1. Für eine vertikale Bewegungsrichtung sind die Reflektoren 4,6 und die Abfrageeinheit 5 oben bzw. unten und die Antriebsmittel seitlich angeordnet. Für eine horizontale und vertikale Bewegungsrichtung sind die Reflektoren 4,6 und die Abfrageeinheit 5 oben, unten und seitlich sowie die Antriebsmittel 3 unten und seitlich angeordnet.

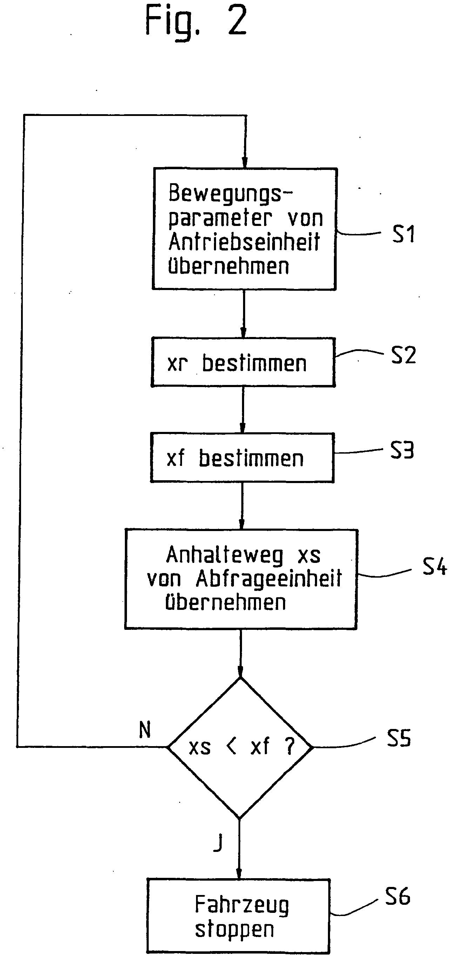

Fig. 2 zeigt einen funktionellen Ablauf einer Stoppeinheit zur Bestimmung des ersten und zweiten Parameters -xf bzw. xr. xf ist der maximale Bremsweg, der auch unter schlechtesten Umgebungsbedingungen nicht überschritten wird. Das negative Vorzeichen steht für sich auf der gemeinsamen Fahrbahn mit entgegengesetzter Bewegungsrichtung bewegende Hindernisse. xr ist der minimale Bremsweg, der auch unter besten Voraussetzungen nicht unterschritten wird. xf wird nach der Formel xf = ½·v²/aₘᵢₙ und xr wird nach der Formel xr = ½·v²/aₘₐₓ berechnet, wobei v die Geschwindigkeit, amin die minimale Verzögerung und aₘₐₓ die maximale Verzögerung des Fahrzeuges sind.

In einem ersten Schritt S1 des funktionellen Ablaufs übernimmt die Stoppeinheit 7 von der Antriebseinheit 2 Bewegungsparameter wie beispielsweise Fahrzeuggeschwindigkeit, Bremsparameter, Verzögerung, usw. Daraus wird in einem zweiten Schritt S2 der minimale Bremsweg xr und in einem dritten Schritt S3 der maximale Bremsweg xf bestimmt. Im einem vierten Schritt S4 übernimmt die Stoppeinheit 7 einen von der Abfrageeinheit 5 bestimmten Anhalteweg xs, der sich aus der Distanz zum vorausliegenden Hindernis und aus dem Bremsweg des Hindernisses zusammensetzt. Im Prüfschritt S5 wird der zur Verfügung stehende Anhalteweg xs mit dem maximalen Bremsweg xf verglichen. Bei einem negativen, mit einem N symbolisierten Ausgang der Prüfung wird der Ablauf iterativ bei S1 fortgesetzt. Bei einem positiven, mit einem J symbolisierten Ausgang der Prüfung wird der Ablauf mit dem Schritt S6 fortgesetzt, in dem das Fahrzeug 1 aus Sicherheitsgründen gestoppt wird.

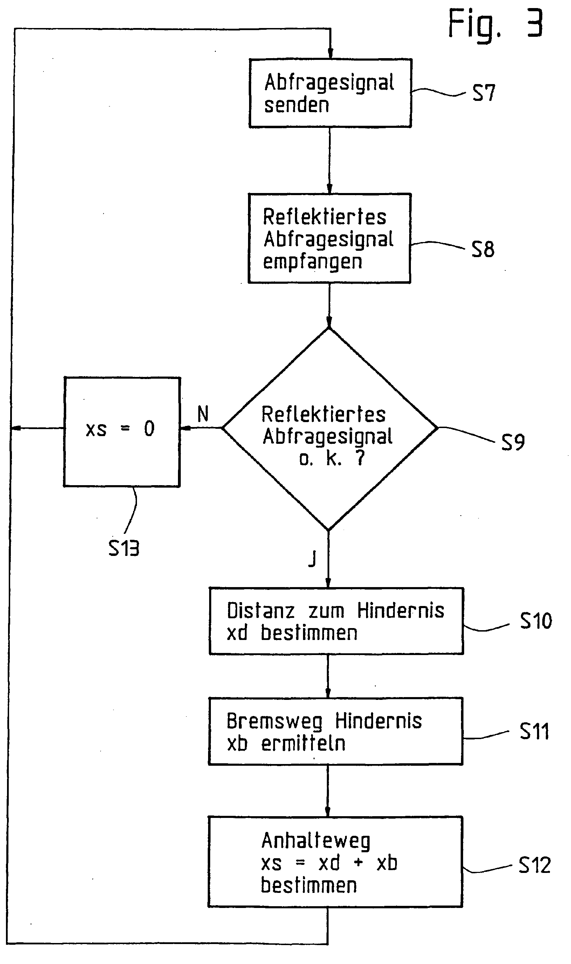

Fig. 3 zeigt einen funktionellen Ablauf der Abfrageeinheit 5 zur Bestimmung der Distanz zum Hindernis und zur Ermittlung des Hindernisbremsweges. In einem Schritt S7 sendet die Abfrageeinheit 5 das Abfragesignal 8. Im Schritt S8 wird das vom Rückreflektor des Hindernisses reflektierte Abfragesignal 9 von der Abfrageeinheit 5 empfangen und im Schritt S9 geprüft. Bei einem negativen, mit einem N symbolisierten Ausgang der Prüfung wird der Ablauf mit dem Schritt S13 fortgesetzt, im dem der Anhalteweg xs auf Null gesetzt wird. Anschliessend wird der Ablauf iterativ bei S7 fortgesetzt. Bei einem positiven, mit einem J symbolisierten Ausgang der Prüfung wird der Ablauf mit dem Schritt S10 fortgesetzt, in dem die Distanz xd zum Hindernis von der Abfrageeinheit 5 bestimmt wird. Im nächsten Schritt S11 ermittelt die Abfrageeinheit 5 den vom Hindernis bestimmten Bremsweg xb. Im gezeigten Beispiel ist der Bremsweg xb der minimale Bremsweg des Hindernisses und wird im Rückreflektor des Hindernisses dem Abfragesignal 8 aufmoduliert, wobei die Abfrageeinheit 5 aus dem reflektierten Abfragesignal 9 den Bremsweg xb des Hindernisses ermittelt. Aus der Distanz xd und dem Bremsweg xb wird im Schritt S12 der Anhalteweg xs bestimmt. Anschliessend wird der Ablauf iterativ bei S7 fortgesetzt. Falls sich das Hindernis entgegengesetzt zum Fahrzeug 1 bewegt, trifft das Abfragesignal 8 auf den Frontreflektor des Hindernisses, wobei das Abfragesignal 8 mit dem maximalen Bremsweg des Hindernisses moduliert wird und wegen der entgegengesetzten Bewegungsrichtung des Hindernisses mit einem negativen Vorzeichen versehen.

Ein Hindernis kann auch durch einen ortsfesten oder schwenkbaren, beispielsweise an einer horizontalen/vertikalen Fahrbahnkreuzung oder am Ende der Fahrbahn angeordneten Reflektor repräsentiert sein. Der Reflektor kann beispielsweise mittels der Schachttüren des Aufzugsschachtes betätigbar sein. Das Abfragesignal eines herannahenden Fahrzeuges wird in einem solchen Reflektor mit einem Null Bremsweg beaufschlagt. An der Kreuzung können auch Abfrageeinheiten angeordnet sein, die die Distanz und der Bremsweg des herannahenden Fahrzeuges ermitteln. Die Abfrageeinheit entscheidet aufgrund der Fahrdaten, ob eine Richtungsänderung beispielsweise von horizontal auf vertikal möglich ist.

Fig. 4 zeigt ein Blockschema der Abfrageeinheit 5, die ein Abfragesignal 8 aussendet, das vom Rückreflektor eines in Bewegungsrichtung F1 vorausliegenden Hindernisses als reflektiertes Abfragesignal 9 reflektiert wird. Zur Erzeugung des Abfragesignales 8 generiert ein Impulsgenerator 14 eine Impulsfolge, die mittels eines Modulators 15 mit zugehörigem HF-Generator 16 in ein hochfrequentes Signal umgesetzt wird. Eine Antenne 17 strahlt das hochfrequente Signal als Abfragesignal 8 in Richtung des vorausliegenden Hindernisses ab. Das Abfragesignal 8 trifft am Rückreflektor des vorausliegenden Hindernisses ein und wird mit der Information über den Bremsweg moduliert. Das durch den Reflektor 6 zurückgestrahlte Abfragesignal 9 ist in der Amplitude mit der Bremsweginformation moduliert und wird von der Antenne 17 der Abfrageeinheit 8 empfangen. Ein Demodulator 18 und ein Decoder 19 ermitteln aus dem reflektierten Abfragesignal 9 ein den Bremsweg des Hindernisses darstellendes Signal xb. Ein Korrelator 20 ermittelt aus dem reflektierten Abfragesignal 9 und der ausgesendeten Impulsfolge des Impulsgenerators 14 eine Signallaufzeit T. Aus der Ausbreitungsgeschwindigkeit v der elektromagnetischen Wellen und der Signallaufzeit T kann die Distanz zum vorausligenden Hindernis nach der Formel xd = (v * T)/2 bestimmt werden.

## Patentansprüche

1. Verfahren zur Gewährleistung der Kollisionssicherheit eines Transportsystems mit als Fahrzeuge dienenden Aufzugskabinen auf gemeinsamen Fahrbahnen, wobei aus den Fahrdaten der Fahrzeuge das Bremsverhalten der Fahrzeuge bestimmt wird und wobei ein Fahrzeug (1) zu seiner autonomen Fortbewegung bei der Ermittlung der Distanz zu einem in Bewegungsrichtung vorausliegenden Hindernis auch das Bremsverhalten des Hindernisses ermittelt und aus diesen Fahrdaten das eigene Bremsverhalten bestimmt,
**dadurch gekennzeichnet,**
**dass** eine Abfrageeinheit (5) des Fahrzeuges (1) ein Abfragesignal (8) erzeugt, das vom vorausliegenden Hindernis reflektiert und dabei mit dem Bremsweg des vorausliegenden Hindernisses moduliert wird, wobei die Abfrageeinheit (5) aus dem reflektierten Abfragesignal (9) die Distanz zum Hindernis (xd) und den Bremsweg (xb) des Hindernisses ermittelt.

2. Verfahren nach Anspruch 1,
**dadurch gekennzeichnet,**
**dass** eine Stoppeinheit (7) des Fahrzeuges (1) den eigenen Bremsweg bestimmt und das eigene Bremsverhalten dem eigenen Bremsweg, der Distanz zum Hindernis und dem Bremsweg des Hindernisses anpasst.

3. Verfahren nach Anspruch 2,
**dadurch gekennzeichnet,**
**dass** die Stoppeinheit (7) einen minimalen Bremsweg (xr) bestimmt und zur Beaufschlagung eines Abfragesignales eines in Bewegungsrichtung rückwärtigen Hindernisses einem Rückreflektor (6) zuführt und
**dass** die Stoppeinheit (7) einen maximalen Bremsweg (xf) bestimmt und zur Beaufschlagung eines Abfragesignales eines in Bewegungsrichtung vorausliegenden Hindernisses einem Frontreflektor (4) zuführt.

4. Verfahren nach Anspruch 3,
**dadurch gekennzeichnet,**
**dass** die Reflektoren (4, 6) am Fahrzeug (1) angeordnet oder ortsfest sind.

## Claims

1. Method of ensuring collision safety of a transport system with lift cages, which serve as vehicles, on common guide tracks, wherein the braking behaviour of the vehicles is determined from the travel data of the vehicles and wherein a vehicle (1) also ascertains, with respect to its autonomous onward movement - when ascertaining the spacing from an obstacle lying in front in the direction of movement - the braking behaviour of the obstacle and from these travel data determines the own braking behaviour, **characterised in that** an interrogation unit (5) of the vehicle (1) produces an interrogation signal (8) which is reflected by the obstacle disposed in front and **in that** case is modulated by the braking travel of the obstacle lying in front, wherein the interrogation unit (5) determines from the reflected interrogation signal (9) the spacing from the obstacle (xd) and the braking travel (xb) of the obstacle.

2. Method according to claim 1, **characterised in that** a stopping unit (7) of the vehicle (1) determines the own braking travel and adapts the own braking behaviour to the own braking travel, the spacing from the obstacle and the braking travel of the obstacle.

3. Method according to claim 2, **characterised in that** the stopping unit (7) determines a minimum braking travel (xr) and for the action of an interrogation signal on an obstacle rearward in the direction of movement feeds it to a rear reflector (6) and that the stopping unit (7) determines a maximum braking travel (xf) and for action of an interrogation signal on an obstacle disposed in front in the direction of movement feeds it to a front reflector (4).

4. Method according to claim 3, **characterised in that** the reflectors (4, 6) are arranged at the vehicle (1) or are stationary.

## Revendications

1. Procédé pour assurer une protection anticollision d'un système de transport comprenant des cabines d'ascenseur servant de véhicules sur des voies communes, selon lequel le comportement de freinage des véhicules est défini à partir des données de circulation des véhicules, et pour poursuivre sa course de manière autonome, un véhicule (1), lors de la recherche de la distance par rapport à un obstacle situé devant dans le sens de déplacement, recherche aussi le comportement de freinage de l'obstacle et définit à partir de ces données de circulation son propre comportement de freinage,
**caractérisé en ce qu'**une unité d'interrogation (5) du véhicule (1) produit un signal d'interrogation (8) qui est réfléchi par l'obstacle situé devant et est modulé avec la course de freinage dudit obstacle, l'unité d'interrogation (5) déterminant à partir du signal d'interrogation réfléchi (9) la distance par rapport à l'obstacle (xd) et la course de freinage (xb) de l'obstacle.

2. Procédé selon la revendication 1, **caractérisé en ce qu'**une unité d'arrêt (7) du véhicule (1) définit sa course propre et adapte le comportement de freinage à sa course propre, à la distance par rapport à l'obstacle et à la course de freinage dudit obstacle.

3. Procédé selon la revendication 2, **caractérisé en ce que** l'unité d'arrêt (7) définit une course de freinage minimale (xr) et la transmet à un réflecteur arrière (6) pour agir sur un signal d'interrogation d'un obstacle arrière dans le sens de déplacement, et **en ce que** l'unité d'arrêt (7) définit une course de freinage maximale (xf) et la transmet à un réflecteur avant (4) pour agir sur un signal d'interrogation d'un obstacle situé devant dans le sens de déplacement.

4. Procédé selon la revendication 3, **caractérisé en ce que** les réflecteurs (4, 6) sont disposés sur le véhicule (1) ou sont fixes.
